# EUROPÄISCHE PATENTSCHRIFT

(11) **EP 3 280 911 B1**
(45) Veröffentlichungstag und Bekanntmachung des Hinweises auf die Patenterteilung: **16.09.2020**
(21) Anmeldenummer: 16714916.0
(22) Anmeldetag: 07.04.2016
(51) Int. Cl.: F03D 7/02, F03D 80/00

(54) **VERSTELLEINRICHTUNG ZUM VERSTELLEN EINES ROTORBLATTES EINER WINDENERGIEANLAGE**
ADJUSTING DEVICE FOR ADJUSTING A ROTOR BLADE OF A WIND TURBINE
DISPOSITIF DE RÉGLAGE POUR RÉGLER UNE PALE DE ROTOR D'ÉOLIENNE

(30) Priorität: 10.04.2015 DE 102015206488
(43) Veröffentlichungstag der Anmeldung: 14.02.2018
(73) Patentinhaber: Wobben Properties GmbH, 26607 Aurich (DE)
(72) Erfinder: EDEN, Georg, 26556 Westerholt (DE)
(74) Vertreter: Eisenführ Speiser
(86) Internationale Anmeldenummer: PCT/EP2016/057619
(87) Internationale Veröffentlichungsnummer: WO 2016/162421

(56) Entgegenhaltungen:
- EP-A1- 1 286 048
- EP-A1- 2 058 939
- DE-U1- 20 020 232
- DE-U1-202005 005 694

## Beschreibung

Die vorliegende Erfindung betrifft eine Verstelleinrichtung und ein Verfahren zum Verstellen eines Anstellwinkels eines Rotorblattes einer Windenergieanlage. Weiterhin betrifft die vorliegende Erfindung eine eine solche Verstelleinrichtung aufweisende Windenergieanlage.

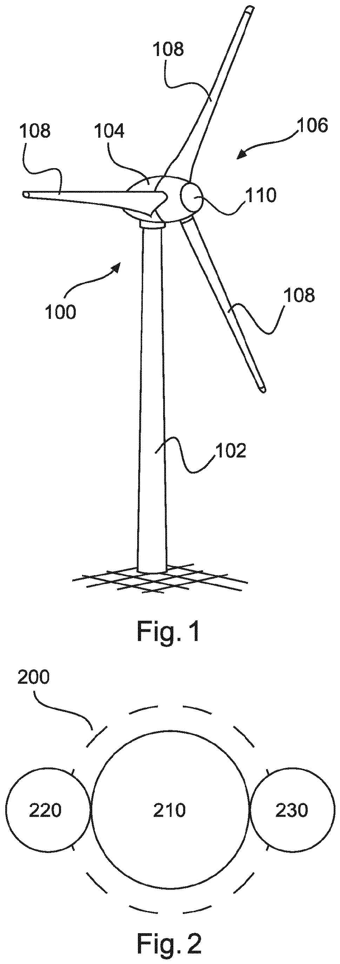

Windenergieanlagen, die aus Wind elektrischen Strom erzeugen und diesen in ein elektrisches Versorgungsnetz einspeisen, sind allgemein bekannt. Ein Beispiel einer solchen Windenergieanlage ist in Fig. 1 schematisch dargestellt.

Üblicherweise weisen moderne Windenergieanlagen eine Rotorblattverstelleinrichtung auf, also eine Einrichtung zum Verstellen eines Anstellwinkels eines Rotorblattes. Solche Verstelleinrichtungen, die auch als Pitchverstelleinrichtung oder einfach als Pitcheinrichtungen bezeichnet werden können, können durch das Verstellen des Anstellwinkels sowohl die Abgabeleistung der Windenergieanlage regeln, als auch die Belastung der Windenergieanlage bei hohen Windgeschwindigkeiten begrenzen. Zum Verstellen weisen diese Verstelleinrichtungen einen oder mehrere Motoren auf, die auch als Pitchmotoren bezeichnet werden. Ein Verstellvorgang zum Verstellen des Anstellwinkels wird auch als Pitchen bezeichnet.

Das Streben nach immer leistungsstärkeren Windenergieanlagen führt unter anderem auch zu größer werdenden Rotorblättern. Somit steigen auch die Anforderungen, die an eine Rotorblattverstelleinrichtung gestellt werden. Insbesondere die Motorleistung der Rotorblattverstelleinrichtung steigt mit der Rotorblattgröße an.

Aus dem Dokument EP 1 337 755 ist eine Verstelleinrichtung mit mehreren Motoren zum Verstellen des Anstellwinkels eines Rotorblattes einer Windenergieanlage bekannt. Das Dokument offenbart hierzu unter anderem eine elektrische Verschaltung von mehreren Motoren. Nachteilig bei dieser Lösung ist vor allem der Umstand, dass eine elektrisch ungleiche Belastung der Motoren auftreten kann, die zu einer unzulässigen Erwärmung der Motoren, und zu einer ungewollten Feldschwächung, führen kann.

In der prioritätsbegründenden deutschen Patentanmeldung hat das Deutsche Patent- und Markenamt die folgenden Dokumente recherchiert: DE 10 2004 005 169 B3, DE 10 2007 053 613 A1, DE 297 22 109 U1, DE 692 25 995 T2, DE 893 962 B, DE 19 37 306 A, FR 972 025 A und EP 1 337 755 A1.

Ferner hat das Europäische Patentamt in dem internationalen Recherchenbericht die folgenden Dokumente recherchiert: DE 20 2005 005 694 U1, DE 200 20 232 U1, EP 2 058 939 A1 und EP 1 286 048 A1.

Aufgabe der vorliegenden Erfindung ist es daher, wenigstens eines der vorgenannten Probleme zu adressieren. Insbesondere soll der bekannte Stand der Technik verbessert werden und eine Verstelleinrichtung vorgeschlagen werden, die eine gleiche Belastung von wenigstens zwei Gleichstrommotoren ermöglicht. Zumindest soll gegenüber dem bisher bekannten eine alternative Lösung vorgeschlagen werden.

Erfindungsgemäß wird eine Verstelleinrichtung nach Anspruch 1 vorgeschlagen.

Es wird somit eine Verstelleinrichtung zum Verstellen eines Anstellwinkels eines Rotorblattes einer Windenergieanlage vorgeschlagen, wobei die Verstelleinrichtung wenigstens zwei Gleichstrommotoren aufweist und die wenigstens zwei Gleichstrommotoren untereinander zumindest abschnittsweise elektrisch in Serie verschaltet sind.

Gleichstrommotoren sind rotierende elektrische Maschinen, die mit Gleichstrom betrieben werden und einen unbeweglichen Teil, den Stator, und einen beweglichen Teil, den Rotor, aufweisen. Konventionelle Gleichstrommotoren sind so eingerichtet, dass der Rotor den inneren Teil der Gleichstrommaschine bildet und wenigstens eine Wicklung, die Ankerwicklung, aufweist und der Stator entweder permanenterregt, also mit einem Permanentmagneten, oder mit wenigstens einer Wicklung, der Erregerwicklung, ausgeführt ist.

Die wenigstens zwei Gleichstrommotoren der vorgeschlagenen Verstelleinrichtung weisen Erreger- und Feldwicklungen bzw. Ankerwicklungen auf, diese können vollständig oder zumindest abschnittsweise elektrisch in Serie verschaltet sein. Eine elektrische Verschaltung in Serie kann auch als Reihenschaltung bezeichnet werden. Für eine abschnittsweise Verschaltung der wenigstens zwei Gleichstrommotoren können beispielsweise die Erregerwicklungen und/oder die Ankerwicklungen der wenigstens zwei Gleichstrommotoren elektrisch in Serie verschaltet werden. Es kommt auch in Betracht, dass nur jeweils ein Teil der Wicklungen in Serie verschaltet sind. Für eine vollständige Verschaltung der wenigstens zwei Gleichstrommotoren werden insbesondere alle Anker- und Erregerwicklungen miteinander elektrisch in Serie verschaltet. Weiterhin kann auch in Betracht kommen, dass die Anker- und/oder Erregerwicklungen der wenigstens zwei Gleichstrommotoren in Abschnitte, insbesondere Wicklungsabschnitte, aufgeteilt sind. Diese Wicklungsabschnitte werden dann, genau wie die Anker- und Erregerwicklungen, insbesondere als Zweipol, von einer Spannungsquelle angesteuert, insbesondere mit Strom versorgt.

Durch eine elektrische Verschaltung in Serie wird, was durch den Kirchhoffschen Knotensatz begründet ist, derselbe Strom durch die Wicklungen einer solchen Serienschaltung erzwungen. Somit wird zumindest für die elektrisch in Serie verschalteten Wicklungen bzw. Wicklungsabschnitte der wenigstens zwei Gleichstrommotoren erreicht, dass durch diese derselbe Strom fließt. Dadurch weisen die wenigstens zwei Gleichstrommotoren, aufgrund der proportionalen Strom-Drehmoment-Beziehung eines Gleichstrommotors, gleiche mechanische Momente, insbesondere Antriebskräfte, auf, unabhängig davon, ob beispielsweise einer der wenigstens zwei Gleichstrommotoren durch beispielsweise eine Erwärmung des Gleichstrommotors einen veränderten Innenwiderstand aufweist. Im Falle einer Parallelschaltung würden ungleiche Innenwiderstände der wenigstens zwei Gleichstrommotoren unvorteilhaft zu unterschiedlichen Strömen innerhalb der wenigstens zwei Gleichstrommotoren und somit zu unterschiedlichen mechanischen Momenten führen. Das wird nun vermieden.

Vorzugsweise sind die wenigstens zwei Gleichstrommotoren mechanisch gekoppelt.

Die wenigstens zwei Gleichstrommotoren können somit direkt oder indirekt mechanisch, insbesondere miteinander, gekoppelt sein. Bei einer direkten mechanischen Kopplung der wenigstens zwei Gleichstrommotoren können die Rotoren auf einer gemeinsamen Welle angeordnet sein oder diese gemeinsame Welle bilden, Dafür sind beispielsweise die Ankerwicklungen der wenigstens zwei Gleichstrommotoren auf derselben Welle, angeordnet und treiben diese im Betrieb an.

Bei einer indirekten mechanischen Kopplung der wenigstens zwei Gleichstrommotoren weisen diese separate Rotoren auf. Die Ankerwicklungen der wenigstens zwei Gleichstrommotoren sind somit auf unterschiedlichen Wellen angeordnet, auf die sie wirken. Die mechanische Kopplung der Rotoren kann bspw. über ein gemeinsames Kopplungselement wie einen Zahnkranz erfolgen. Bspw. kann ein solcher Zahnkranz an einer Rotorblattwurzel angeordnet sein, so dass beide Rotoren über diesen Zahnkranz mechanisch gekoppelt sind und dabei gleichzeitig gemeinsam auf die Blattwurzel wirken und das Blatt in seinem Anstellwinkel verstellen können.

Durch die mechanische Kopplung der wenigstens zwei Gleichstrommotoren werden die Antriebskräfte mechanisch gleichmäßig auf die wenigstens zwei Gleichstrommotoren verteilt und durch die Serienschaltung wird dafür erreicht, dass auch elektrisch gleiche Drehmomente aufgebracht werden.

Gemäß einer Ausführungsform wird vorgeschlagen, dass jeweils zwei Motoren paarweise auf einen Zahnkranz wirken, besonders so, dass jeweils zwei elektrisch zueinander in Reihe geschaltete Motoren ein Motorenpaar bilden und auch örtlich zueinander benachbart angeordnet sind. Vorzugsweise sind zwei, drei oder mehr solcher Motorenpaare an einem Zahnkranz angeordnet. Jedes Motorenpaar kann dadurch die beschriebenen Vorteile der Reihenschaltung ausnutzen.

Vorzugsweise sind die Motoren in Motoraufnahmen aufgenommen, um von dort aus auf den Zahnkranz einzugreifen. Die Motoraufnahmen sind dabei dazu vorbereitet, dass die Position der Pitchmotoren, insbesondere paarweise, verändert werden kann. Vorzugsweise sind dafür mehr Aufnahmen als Pitchmotoren vorgesehen, so dass jeweils ein Pitchmotor, oder ein Motorenpaar, aus einer Aufnahme bzw. zwei Aufnahmen, genommen und in einer günstigeren Position in einer bisher freien Aufnahme angeordnet werden, um dadurch an einem anderen, weniger verschlissenen Abschnitt des Zahnkranzes anzugreifen.

Vorzugsweise sind die Ankerwicklungen der wenigstens zwei Gleichstrommotoren elektrisch in Serie verschaltet.

Die Erzeugung des Drehmomentes durch die Ankerwicklungen kann somit für beide, oder mehrere, Motoren in gleicher Höhe gewährleistet werden, weil durch beide Ankerwicklungen derselbe Strom fließt. Die elektrische Verschaltung der elektrisch in Serie verschalteten Ankerwicklungen kann dabei teilweise oder vollständig elektrisch in Serie und/oder elektrisch parallel zu den Erregerwicklungen der wenigstens zwei Gleichstrommotoren ausgeführt sein. Beispielsweise können die Ankerwicklungen untereinander elektrisch in Serie verschaltet sein, wohingegen die Erregerwicklungen elektrisch getrennt voneinander und elektrisch getrennt von den Ankerwicklungen verschaltet sind. Dadurch wird erreicht, dass die elektrisch in Serie verschalteten Ankerwicklungen getrennt von den Erregerwicklungen gespeist werden können. Somit können verschiedene Kennlinienfelder, also Momentenverläufe, beispielsweise ein hohes Drehmoment bei Stillstand durch die Ansteuerung erreicht werden. Gleichzeitig können unterschiedliche Drehmomente zwischen den Motoren vermieden werden.

Durch ein Verschalten der Ankerwicklungen der wenigstens zwei Gleichstrommotoren elektrisch in Serie, fließt durch die Ankerwicklungen der wenigstens zwei Gleichstrommotoren derselbe Strom. Dadurch werden die wenigstens zwei Gleichstrommotoren ankerseitig gleich belastet

Gemäß einer weiteren Ausgestaltung wird geschlagen, die Erregerwicklungen der wenigstens zwei Gleichstrommotoren elektrisch in Serie zu verschalten.

Die Erregerwicklungen können teilweise oder vollständig elektrisch in Serie und/oder elektrisch parallel zu den Ankerwicklungen der wenigstens zwei Gleichstrommotoren ausgeführt sein. Beispielsweise können die elektrisch in Serie verschalteten Erregerwicklungen niederohmig ausgeführt und elektrisch in Serie mit den Ankerwicklungen der wenigstens zwei Gleichstrommotoren verschaltet sein. Dadurch wird erreicht, dass die so verschalteten Gleichstrommotoren ein Reihenschlussverhalten, nämlich ein stark drehzahlabhängiges Drehmomentverhalten, aufweisen. Es kann auch in Betracht kommen, die Eisenkerne der Statoren geblecht auszuführen und somit die wenigstens zwei Gleichstrommotoren als Universalmotoren, insbesondere Einphasen-Reihenschlussmotoren mit Wechselspannung, einzurichten.

Durch ein Verschalten der Erregerwicklungen der wenigstens zwei Gleichstrommotoren elektrisch in Serie, fließt durch die Erregerwicklungen dieser Gleichstrommotoren derselbe Strom. Dadurch werden die wenigsten zwei Gleichstrommotoren erregerseitig gleich belastet.

Weiterhin ist es erfindungsgemäß auch möglich, die Ankerwicklungen der wenigstens zwei Gleichstrommoren und die Erregerwicklungen der wenigstens zwei Gleichstrommotoren gemeinsam elektrisch in Serie zu verschalten. Das ergäbe dann eine Serienschaltung aus wenigstens zwei Ankerwicklungen und zwei Erregerwicklungen.

Durch ein vollständiges und gemeinsames Verschalten der Anker- und Erregerwicklugen der wenigstens zwei Gleichstrommotoren wird erreicht, dass sowohl durch die Anker- als auch durch die Erregerwicklungen der wenigstens zwei Gleichstrommotoren ein und derselbe Strom fließt. Die wenigstens zwei Gleichstrommotoren sind somit vollständig miteinander elektrisch gekoppelt und weisen ein gemeinsames Reihenschlussverhalten auf. Insbesondere wird für eine solche Verschaltung vorgeschlagen, die Erregerwicklungen niederohmig auszuführen und die Gleichstrommotoren mechanisch zu koppeln. Hierdurch wird erreicht, dass die wenigstens zwei Gleichstrommotoren ein stark drehzahlabhängiges Drehmomentverhalten aufweisen. Dies ist insbesondere von Vorteil, wenn wie bei einer Rotorblattverstellung hohe Anlaufmomente benötigt werden.

Eine bevorzugte Ausführungsform ist dadurch gekennzeichnet, dass die wenigstens zwei Gleichstrommotoren jeweils eine zweite Erregerwicklung aufweisen, wobei diese zweiten Erregerwicklungen zu einander elektrisch in Serie verschaltet sind.

Die zweite Erregerwicklung erzeugt ein zweites Erregerfeld, wobei das zweite Erregerfeld beispielsweise von gleicher Richtung und gleichem Richtungssinn wie das übrige bzw. erste Erregerfeld ist.

Beispielsweise wird vorgeschlagen, die jeweils zweite oder jeweils erste Erregerwicklung als fremderregte Wicklung zur jeweiligen Ankerwicklung auszuführen und die Ankerwicklung und die jeweilige Erregerwicklung elektrisch in Serie zu verschalten. Dadurch weisen die wenigstens zwei Gleichstrommotoren ein insbesondere vorteilhaftes Betriebsverhalten für ein Verstellen eines Anstellwinkels eines Rotorblattes auf, weil die Serienschaltung einen gleichen Strom in allen Motoren gewährleistet und über die Fremderregung gezielt eingegriffen werden kann. Es kann auch in Betracht kommen, die zweiten Erregerwicklungen so auszuführen, dass sie als Verzögerungseinrichtung, insbesondere Motorbremse, wirken.

Eine besonders bevorzugte Ausführungsform ist dadurch gekennzeichnet, dass die wenigstens zwei Gleichstrommotoren jeweils eine bzw. die zweite Erregerwicklung aufweisen, und die zweiten Erregerwicklungen zu den Ankerwicklungen und/oder übrigen Erregerwicklungen der wenigstens zwei Gleichstrommotoren elektrisch zu einander in Serie verschaltet sind.

Alternativ können die ersten, untereinander elektrisch in Serie verschalteten, Erregerwicklungen elektrisch parallel zu den übrigen Wicklungen verschaltet werden, was gemäß einer Ausführungsform vorgeschlagen wird. Hierdurch weisen die wenigsten zwei Gleichstrommotoren sowohl Reihen- als auch Nebenschlussverhalten auf und sind dadurch so eingerichtet wie ein Mehrfachmotor, insbesondere Doppelmotor, wobei jeder Gleichstrommotor insbesondere wie ein Doppelschlussmotor ausgeführt ist. Die Vorteile eines Doppelschlussmotors können somit genutzt werden, es besteht dann aber die Gefahr, dass sich die Motoren nicht ganz gleich verhalten.

Ferner wird vorgeschlagen die zweiten Erregerwicklungen jeweils als zuschaltbare Wicklungen auszuführen, so dass die zweiten Erregerwicklungen jeweils mittels eines Schalters zu- und/oder weggeschaltet werden können, Insbesondere bei einer Notverstellung des Rotorblattes können die zweiten Erregerwicklungen jeweils in Serie zur Ankerwicklung zugeschaltet werden. Durch das Zuschalten der zweiten Erregerwicklungen in Serie weisen die Gleichstrommotoren dann ein Reihenschlussverhalten auf, also ein Verhalten, das ein besonders hohes Anlaufmoment zum Verstellen des Rotorblattes erzeugen kann. Durch die Reihenschaltung der zweiten Erregerwicklung zur Ankerwicklung wirkt diese zweite Erregerwicklung nur in eine Richtung ergänzend und diese Richtung wird so gewählt, dass sie der Richtung einer Notverstellung des betreffenden Rotorblatts entspricht.

In einer besonders bevorzugten Ausführungsform liegen die zweiten Erregerwicklungen mechanisch in der ersten Erregerwicklung, können insbesondere jeweils in derselben Nut des Stators liegen.

Die Spannungsquelle versorgt somit die Verstelleinrichtung und durch die vorgeschlagene Serienverschaltung stellt sich für die betroffenen Motoren jeweils derselbe Strom ein. Die Motoren der Verstelleinheit, und damit die Verstelleinheit als solche, lassen sich dadurch auf einfache und gleichzeitig gleichmäßige Art und Weise ansteuern. Eine besonders bevorzugte Ansteuerung der wenigstens zwei Gleichstrommotoren erfolgt über die in Serie verschalteten Ankerwicklungen. Hierfür werden die ersten und zweiten Erregerwicklungen der wenigstens zwei Gleichstrommotoren in Serie verschaltet und mit einer konstanten Spannung versorgt. Die Ankerwicklungen der wenigstens zwei Gleichstrommotoren werden ebenfalls in Serie verschaltet und mit einer variablen, regelbaren Spannung angesteuert. Besonders vorteilhaft bei einer solchen Ansteuerung ist, dass keine elektronische Regelung erforderlich ist, die das Moment der beiden Motoren symmetriert.

Außerdem wird eine Windenergieanlage vorgeschlagen, die wenigstens mit einer Verstelleinrichtung nach einem der vorstehenden Ausführungsformen versehen ist. Die Vorteile der Verstelleinrichtung kommen somit der Windenergieanlage zugute. Dabei können, besonders zum Erreichen einer Redundanz und/oder zum Aufteilen der benötigten Leistung, mehrere Pitchmotoren vorgesehen sein. Durch die vorgeschlagenen Verschaltungen können solche mehrere Pitchmotoren auf gleichmäßige und dabei einfache und verlässliche Art und Weise betrieben werden.

Verfahren zum Betreiben einer Verstelleinrichtung zum Verstellen eines Anstellwinkels eines Rotorblatts einer Windenergieanlage, wobei wenigstens zwei Gleichstrommotoren verwendet und zum Verstellen angesteuert werden, wobei eine Verstelleinrichtung gemäß wenigstens einem der vorstehend beschriebenen Ausführungsformen verwendet wird und/oder eine vorstehend beschriebene Windenergieanlage verwendet wird. Vorzugsweise werden die wenigstens zwei Gleichstrommotoren so angesteuert, wie oben insbesondere im Zusammenhang mit wenigstens einer Ausführungsform einer Verstelleinrichtung beschrieben wurde.

Die vorliegende Erfindung wird nun nachfolgend exemplarisch anhand von Ausführungsbeispielen unter Bezugnahme auf die begleitenden Figuren näher erläutert.
- Fig. 1:: zeigt eine schematische Ansicht einer Windenergieanlage,
- Fig. 2:: zeigt schematisch einen Zahnkranz einer Rotorblattwurzel mit Pitchmotoren und
- Fig. 3:: zeigt eine schematische Verschaltung zweier Pitchmotoren elektrisch in Serie und
- Fig. 4:: zeigt eine bevorzugte Ausführungsform eines Pitchmotors.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Fig. 2 verdeutlicht eine mechanische Kopplung 200, die als mechanisches Kopplungselement einen Zahnkranz 210 aufweist, auf den zwei Pitchmotoren 220 und 230 wirken, die dadurch mechanisch gekoppelt sind. Solche Gleichstrommotoren können hier als Pitchmotoren 220 und 230 eingesetzt werden, wobei eine Serienverschaltung gemäß wenigstens einer Ausführungsform verwendet wird. Das mechanische Kopplungselement 210, ist somit als Zahnkranz 210 mit Außenverzahnung ausgebildet und an einer Rotorblattwurzel fest befestigt, so dass durch Antreiben des Zahnkranzes 210 durch die beiden Pitchmotoren 220 und 230 das betreffende Rotorblatt verdreht werden kann. Die beiden Pitchmotoren 220 und 230 sind in gleichem Abstand am Umfang des Zahnkranzes 210 angeordnet und greifen durch entsprechende Ritzel, die jeweils mit einer Rotorwelle der Pitchmotoren 220 bzw. 230 verbunden sind in die Außenverzahnung des Zahnkranzes ein. Bei konventionellen Gleichstrommotoren wird der drehbar gelagerte Teil der Gleichstrommotoren, also der Rotor, auch als Anker bezeichnet und ist innenliegend auf einer Welle angeordnet. Es kann auch in Betracht kommen, die Gleichstrommotoren als Außenläufer einzurichten und/oder das Rotorblatt mit einer Innenverzahnung auszuführen und die Gleichstrommotoren innerhalb der Innenverzahnung anzuordnen.

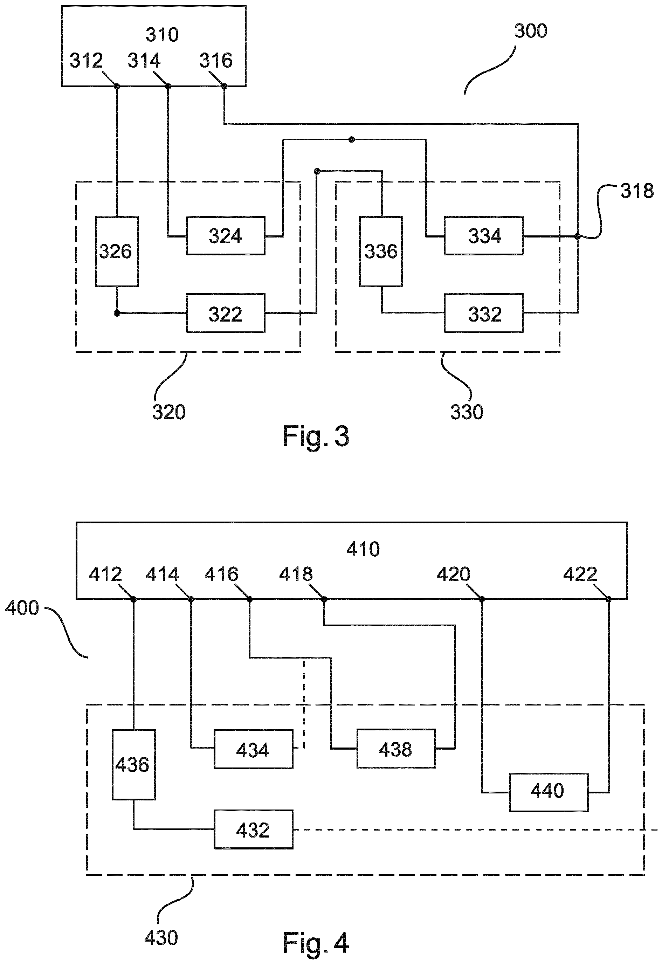

Fig. 3 zeigt eine besonders bevorzugte elektrische Verschaltung 300 eines ersten und zweiten Gleichstrommotors 320 bzw. 330, die als erster bzw. zweiter Pitchmotor 220 bzw. 230 gemäß Fig. 2 eingesetzt werden können. Weiterhin weist die elektrische Verschaltung 300 eine elektrische Spannungsquelle 310 auf, wobei die elektrische Spannungsquelle 310 mit drei spannungsführenden Ausgängen 312, 314 und 316 versehen ist. Die Gleichstrommotoren 320 und 330 weisen jeweils eine Ankerwicklung 322 und 332, eine erste Erregerwicklung 324 und 334 und eine zweite Erregerwicklung 326 und 336 auf. Die Ankerwicklung 322 und die zweite Erregerwicklung 326 des Gleichstrommotors 320 sind ebenso elektrisch in Serie verschaltet wie die Ankerwicklung 332 und die zweite Erregerwicklung 336 des Gleichstrommotors 330. Die so verschalteten Anker- und Erregerwicklungen 322 und 326 bzw. 332 und 336 sind ebenfalls miteinander elektrisch in Serie verschaltet und an den spannungsführenden Ausgang 312 der Spannungsquelle 310 angeschlossen, so dass diese vier Wicklungen zusammen in einer gemeinsamen Reihenschaltung verschaltet sind. Die ersten Erregerwicklungen 324 und 334 der Gleichstrommotoren 320 und 330 sind ebenfalls elektrisch in Serie verschaltet und an den spannungsführenden Ausgang 314 der Spannungsquelle 310 angeschlossen. Die in Serie verschalteten Anker- und zweiten Erregerwicklungen 322, 326 bzw. 332 und 336 werden gemeinsam parallel zu den in Serie verschalteten ersten Erregerwicklung 324 und 334 verschaltet.

Vorzugsweise können die beiden zweiten Erregerwicklungen 326 und 336 jeweils durch einen Schalter zu- oder wegschaltet werden. Vorzugsweise werden davon abhängig unterschiedliche Spannungsquellen verwendet, die auch als Stromsteller bezeichnet werden können. Insoweit ist in der gezeigten Ausführungsform der Fig. 3 die Spannungsquelle 310 ein Stromsteller für den Betrieb mit den zweiten Erregerwicklungen 326 und 336, insbesondere für einen Notverstellung.

Somit sind die zwei Gleichstrommotoren 320 und 330 teilweise elektrisch in Serie verschaltet und als Verbundmaschine eingerichtet, wobei die so verschalteten zwei Gleichstrommotoren die Eigenschaften eines Nebenschluss- und eines Reihenschlussmotors vereinen, also kompoundiert sind. Je nach Auslegung der Wicklungen und deren Ansteuerung über die Spannungsquelle 310 weisen die zwei Gleichstrommotoren 320 und 330 unterschiedliche Betriebsverhalten auf. Wird die elektrische Verschaltung 300 beispielsweise überkompoundiert ausgeführt, weisen die zwei Gleichstrommotoren 320 und 330 vorwiegend Reihenschlussverhalten, also ein hohes Anzugsmoment, auf. Wird die elektrische Verschaltung 300 hingegen unterkompoundiert ausgeführt, weisen die zwei Gleichstrommotoren 320 und 330 vorwiegend Nebenschlussverhalten, also eine hohe Drehzahlstabilität, auf.

Besonders vorteilhaft bei der in Fig. 3 gezeigten elektrischen Verschaltung ist die Möglichkeit, die beiden Gleichstrommotoren 320 und 330 über die Spannungsquelle 310 zu steuern. Dadurch lässt sich ein gutes Betriebsverhalten erreichen. Durch die vorgeschlagene Serienschaltung kann für ein gleiches Drehmoment beider Pitchmotoren 320 und 330 gesorgt werden, so dass auch die in Fig. 2 gezeigte Kopplung gut betreibbar ist und nicht die Gefahr besteht, dass einer der Pitchmotoren 320 und 330 gemäß Fig. 3 bzw. 220 und 230 gemäß Fig. 2 durch eine geringe, z.B. thermisch bedingte Ungenauigkeit einen Großteil der Verstellarbeit übernimmt. Weiterhin vorteilhaft ist, dass bei steigender Rotorblattgröße die Verstelleinrichtung um einen Gleichstrommotor oder weitere Gleichstrommotoren erweitert werden kann, wobei insbesondere vorgeschlagen wird, dass dabei alle Gleichstrommotoren desselben Typs sind.

Fig. 4 zeigt eine bevorzugte Ausführungsform des Gleichstrommotors 430, der als Pitchmotor 220 bzw. 230 gemäß Fig. 2 eingesetzt werden kann. Neben den Erregerwicklungen 434 und 436 - und Ankerwicklungen 432, weist der Pitchmotor 430 eine elektrische Bremse 438 und einen elektrische Lüfter 440 auf. Die elektrische Bremse 438, die als Feldbremse ausgeführt ist, und der elektrische Lüfter 440 werden durch die Spannungsquelle 410 angesteuert. Die Feldbremse 438 ist dabei so ausgeführt, dass sie das Erregerfeld des Gleichstrommotors 430 in der Art schwächen kann, dass der Anker des Gleichstrommotors gebremst wird. Die Ansteuerung der Feldbremse 438 erfolgt über die spannungsführenden Ausgänge 416 und 418. Der elektrische Lüfter 440 des Gleichstrommotors 430 wird durch die Spannungsquelle 410 angesteuert, so dass im Falle eines Stillstandes des Gleichstrommotors 430, dieser weiter durch den Lüfter 440 gekühlt werden kann. Die Ansteuerung des elektrischen Lüfters 440 erfolgt über die spannungsführenden Ausgänge 420 und 422.

## Patentansprüche

1. Verstelleinrichtung zum Verstellen eines Anstellwinkels eines Rotorblatts einer Windenergieanlage,
wobei die Verstelleinrichtung:
- wenigstens zwei Gleichstrommotoren (320, 330) mit jeweils einer ersten Erregerwicklung (324, 334) aufweist
und die wenigstens zwei Gleichstrommotoren (320, 330)
- untereinander zumindest abschnittsweise elektrisch in Serie verschaltet sind,
**dadurch gekennzeichnet, dass** die wenigstens zwei Gleichstrommotoren jeweils eine zweite Erregerwicklung (326, 336) aufweisen, wobei diese zweiten Erregerwicklungen (326, 336) zueinander elektrisch in Serie verschaltet sind.

2. Verstelleinrichtung nach Anspruch 1, **dadurch gekennzeichnet, dass** die wenigstens zwei Gleichstrommotoren (320, 330) mechanisch gekoppelt sind.

3. Verstelleinrichtung nach Anspruch 1 oder 2, **dadurch gekennzeichnet, dass** die Ankerwicklungen (322, 332) der wenigstens zwei Gleichstrommotoren (320, 330) elektrisch in Serie verschaltet sind.

4. Verstelleinrichtung nach einem der vorstehenden Ansprüche, **dadurch gekennzeichnet, dass** die Erregerwicklungen (324, 334) der wenigstens zwei Gleichstrommotoren (320, 330) elektrisch in Serie verschaltet sind.

5. Verstelleinrichtung nach einem der vorstehenden Ansprüche, **dadurch gekennzeichnet, dass** die Ankerwicklungen (322, 332) der wenigstens zwei Gleichstrommotoren (320, 330) und die Erregerwicklungen (324, 334) der wenigstens zwei Gleichstrommotoren (320, 330) gemeinsam elektrisch in Serie verschaltet sind.

6. Verstelleinrichtung nach einem der vorstehenden Ansprüche, **dadurch gekennzeichnet, dass** die zweiten Erregerwicklungen (326, 336) der wenigstens zwei Gleichstrommotoren zu den Anker- (322, 332) und/oder Erregerwicklungen (324, 334) der wenigstens zwei Gleichstrommotoren (320, 330) elektrisch in Serie verschaltet sind.

7. Verstelleinrichtung nach einem der vorstehenden Ansprüche, **dadurch gekennzeichnet, dass** die zweiten Erregerwicklungen jeweils als zuschaltbare Wicklung ausgeführt sind.

8. Verstelleinrichtung nach einem der vorstehenden Ansprüche, **dadurch gekennzeichnet, dass** die Verstelleinrichtung eine Spannungsquelle (310) aufweist, eingerichtet die Anker- und Erregerspannungen der wenigstens zwei Gleichstrommotoren (320, 330) zu steuern.

9. Windenergieanlage mit einem Roter mit wenigstens einem verstellbaren Rotorblatt, wobei die Windenergieanlage wenigstens eine Verstelleinrichtung nach einem der vorstehenden Ansprüche zum Verstellen eines Anstellwinkels des wenigstens einen Rotorblatts aufweist.

10. Verfahren zum Betreiben einer Verstelleinrichtung zum Verstellen eines Anstellwinkels eines Rotorblatts einer Windenergieanlage, wobei wenigstens zwei Gleichstrommotoren verwendet und zum Verstellen angesteuert werden, wobei eine Verstelleinrichtung nach einem der Ansprüche 1 bis 8 und/oder eine Windenergieanlage nach Anspruch 9 verwendet wird.

## Claims

1. Adjusting device for adjusting an angle of attack of a rotor blade of a wind turbine, wherein the adjusting device:
- comprises at least two DC motors (320, 330) with at least one of the first excitation windings (324, 334),
and the at least two DC motors (320, 330)
- are electrically interconnected in series among one another at least in sections,
**characterized in that** the at least two DC motors in each case comprise a second excitation winding (326, 336), wherein said second excitation windings (326, 336) are electrically interconnected in series with one another.

2. Adjusting device according to Claim 1, **characterized in that** the at least two DC motors (320, 330) are mechanically coupled.

3. Adjusting device according to Claim 1 or 2, **characterized in that** the armature windings (322, 332) of the at least two DC motors (320, 330) are electrically interconnected in series.

4. Adjusting device according to any of the preceding claims, **characterized in that** the excitation windings (324, 334) of the at least two DC motors (320, 330) are electrically interconnected in series.

5. Adjusting device according to any of the preceding claims, **characterized in that** the armature windings (322, 332) of the at least two DC motors (320, 330) and the excitation windings (324, 334) of the at least two DC motors (320, 330) are jointly electrically interconnected in series.

6. Adjusting device according to any of the preceding claims, **characterized in that** the second excitation windings (326, 336) of the at least two DC motors are electrically interconnected in series with the armature windings (322, 332) and/or excitation windings (324, 334) of the at least two DC motors (320, 330).

7. Adjusting device according to any of the preceding claims, **characterized in that** the second excitation windings are embodied in each case as a connectable winding.

8. Adjusting device according to any of the preceding claims, **characterized in that** the adjusting device comprises a voltage source (310), designed to control the armature and excitation voltages of the at least two DC motors (320, 330).

9. Wind turbine comprising a rotor comprising at least one adjustable rotor blade, wherein the wind turbine comprises at least one adjusting device according to any of the preceding claims for adjusting an angle of attack of the at least one rotor blade.

10. Method for operating an adjusting device for adjusting an angle of attack of a rotor blade of a wind turbine, wherein at least two DC motors are used and driven for the adjustment, wherein an adjusting device according to any of Claims 1 to 8 and/or a wind turbine according to Claim 9 are/is used.

## Revendications

1. Dispositif d'ajustement servant à ajuster un angle d'attaque d'une pale de rotor d'une éolienne,
dans lequel le dispositif d'ajustement :
- présente au moins deux moteurs à courant continu (320, 330) pourvus respectivement d'un premier enroulement d'excitation (324, 334),
et les au moins deux moteurs à courant continu (320, 330)
- sont branchés de manière électrique en série l'un à l'autre au moins par endroits,
**caractérisé en ce que** les au moins deux moteurs à courant continu présentent respectivement un deuxième enroulement d'excitation (326, 336), dans lequel lesdits deux enroulements d'excitation (326, 336) sont branchés l'un par rapport à l'autre en série de manière électrique.

2. Dispositif d'ajustement selon la revendication 1, **caractérisé en ce que** les au moins deux moteurs à courant continu (320, 330) sont couplés de manière mécanique.

3. Dispositif d'ajustement selon la revendication 1 ou 2, **caractérisé en ce que** les enroulements d'induit (322, 332) des au moins deux moteurs à courant continu (320, 330) sont branchés en série de manière électrique.

4. Dispositif d'ajustement selon l'une quelconque des revendications précédentes, **caractérisé en ce que** les enroulements d'excitation (324, 334) des au moins deux moteurs à courant continu (320, 330) sont branchés de manière électrique en série.

5. Dispositif d'ajustement selon l'une quelconque des revendications précédentes, **caractérisé en ce que** les enroulements d'induit (322, 332) des au moins deux moteurs à courant continu (320, 330) et les enroulements d'excitation (324, 334) des au moins deux moteurs à courant continu (320, 330) sont branchés en série conjointement de manière électrique.

6. Dispositif d'ajustement selon l'une quelconque des revendications précédentes, **caractérisé en ce que** les deuxièmes enroulements d'excitation (326, 336) des au moins deux moteurs à courant continu sont branchés de manière électrique en série par rapport aux enroulements d'induit (322, 332) et/ou aux enroulements d'excitation (324, 334) des au moins deux moteurs à courant continu (320, 330).

7. Dispositif d'ajustement selon l'une quelconque des revendications précédentes, **caractérisé en ce**
**que** les deuxièmes enroulements d'excitation sont réalisés respectivement en tant qu'un enroulement pouvant être activé.

8. Dispositif d'ajustement selon l'une quelconque des revendications précédentes, **caractérisé en ce que** le dispositif d'ajustement présente une source de tension (310) mise au moins pour commander les tensions d'induit et de système d'excitation des au moins deux moteurs à courant continu (320, 330).

9. Eolienne avec un rotor avec au moins une pale de rotor pouvant être ajustée, dans laquelle l'éolienne présente au moins un dispositif d'ajustement selon l'une quelconque des revendications précédentes servant à ajuster un angle d'attaque de l'au moins une pale de rotor.

10. Procédé servant à faire fonctionner un dispositif d'ajustement servant à ajuster un angle d'attaque d'une pale de rotor d'une éolienne, dans lequel au moins deux moteurs à courant continu sont utilisés et sont pilotés aux fins de l'ajustement, dans lequel un dispositif d'ajustement selon l'une quelconque des revendications 1 à 8 et/ou une éolienne selon la revendication 9 sont utilisés.
